# EUROPÄISCHE PATENTSCHRIFT

(11) **EP 0 683 135 B1**
(45) Veröffentlichungstag und Bekanntmachung des Hinweises auf die Patenterteilung: **04.03.1998**
(21) Anmeldenummer: 95107556.3
(22) Anmeldetag: 17.05.1995
(51) Int. Cl.: C01B 31/20

(54) **Herstellung hochreinen Kohlendioxids**
Preparation of high purity carbon dioxide
Préparation de gaz carbonique de haute pureté

(30) Priorität: 20.05.1994 DE 4417830
(43) Veröffentlichungstag der Anmeldung: 22.11.1995
(73) Patentinhaber: Linde Aktiengesellschaft, 65189 Wiesbaden (DE)
(72) Erfinder: Gaier, Hans, Dr., D-85276 Pfaffenhofen (DE); Weis, Volker, D-85276 Pfaffenhofen (DE); Wolters, Siegfried, Dipl.-Ing., D-85764 Oberschleissheim (DE); Ebner, Siegfried, Dipl.-Ing., D-85276 Pfaffenhofen (DE)
(74) Vertreter: Kasseckert, Rainer

(56) Entgegenhaltungen:
- PATENT ABSTRACTS OF JAPAN, Band 12, Nr. 446 (C-546)(3293), 24 November 1988
- DATABASE WPI, Woche 8943, Derwent Publications Ltd., London (GB); AN 89-314650
- DATABASE WPI, Woche 9325, Derwent Publications Ltd., London (GB); AN 93-200311

## Beschreibung

Die Erfindung betrifft ein Verfahren zur Herstellung hochreinen Kohlendioxids durch adsorptive Nachreinigung.

Hochreines Kohlendioxid wird beispielsweise zur Extraktion (Supercritical Fluid Extraction, SFE) oder zur Chromatographie (Supercritical Fluid Chromatography, SFC) als Extraktionsmittel bzw. Lösungsmittel (mobiles Medium) verwendet. Die bisher durch destillative Nachreinigung erzeugten Kohlendioxidqualitäten beinhalten zu große Verunreinigungen an Kohlenwasserstoffen und halogenierten Kohlenwasserstoffverbindungen. Beispielsweise weist Kohlendioxid der Reinheit 4.5 (99,995 Vol.-% CO₂) bis zu 2 vpm Kohlenwasserstoffe und bis zu 5 vpm Wasser auf. Für die genannten Anwendungen benötigt man Kohlendioxid mit einem niedrigeren Wassergehalt, mit einem Summengehalt von Kohlenwasserstoffen von höchstens einigen vpb und von halogenierten Kohlenwasserstoffen von höchstens einigen vpt. Als Nachweismittel für die Kohlenwasserstoffe oder die halogenierten Kohlenwasserstoffverbindungen eignen sich der Flammenionisationsdetektor (FID) oder der Electron Capture Detector (ECD). Beispielsweise ist es zum chromatographischen Nachweis von halogenierten Kohlenwasserstoffverbindungen wie Dioxinen, die üblicherweise nur in sehr geringen Konzentrationen vorliegen, äußerst wichtig, daß das Lösungsmittel (mobiles Medium) selbst den betreffenden halogenierten Kohlenwasserstoff nicht enthält, um eine unverfälschte Messung zu erhalten.

Aufgabe vorliegender Erfindung ist es deshalb, ein verbessertes Verfahren zur Herstellung hochreinen Kohlendioxids zu entwickeln, dessen Gehalt an Verunreinigungen, insbesondere an Kohlenwasserstoffen, halogenierten Kohlenwasserstoffverbindungen und Wasser, deutlich verringert ist.

Diese Aufgabe wird erfindungsgemäß dadurch gelöst, daß Restverunreinigungen aufweisendes Kohlendioxid zunächst in flüssiger Phase durch mindestens ein Adsorptionsmittel und anschließend in gasförmiger Phase durch mindestens ein weiteres Adsorptionsmittel geleitet wird.

Als Adsorptionsmittel können beim erfindungsgemäßen Verfahren allein oder in Kombination Aktivkohle, Kieselgel, Aluminiumoxid, Zeolithe, Ionenaustauscher oder Polyamide verwendet werden. In der ersten Reinigungsstufe wird Kohlendioxid in flüssiger Phase durch mindestens ein solches Adsorptionsmittel geleitet, das sich in einer druckfesten Patrone befindet. Aufgrund der starken Wechselwirkung der flüssigen Phase mit dem Adsorbens werden die meisten Verunreinigungen bereits in der ersten Reinigungsstufe adsorbiert. Das flüssige Kohlendioxid wird anschließend auf einen Druck entspannt, in dem es gasförmig vorliegt, und durch mindestens ein weiteres Adsorptionsmittel geführt. Das zweite Adsorbens ist hierbei auf die Reinigung gasförmigen Kohlendioxids angepaßt und beseitigt noch verbliebene Verunreinigungen, bevor das hochreine Kohlendioxid zur Lagerung in einen Druckbehälter geleitet wird.

Es erweist sich vorteilhaft, wenn als Adsorptionsmittel für die gasförmige und/oder flüssige Phase des Kohlendioxids eine Aktivkohle und ein nachgeschaltetes Molekularsieb verwendet werden.

Beispielsweise lassen sich sowohl die flüssige Phase als auch anschließend die gasförmige Phase mit einer solchen Kombination von Adsorptionsmittel nachreinigen. Die Aktivkohle übernimmt hierbei insbesondere die Adsorption von längerkettigen Kohlenwasserstoffen (C₅ bis etwa C₂₀). Das nachgeschaltete Molekularsieb besitzt Poren, in denen die kleineren Kohlenwasserstoffe (bis C₅) und Wassermoleküle hängen bleiben.

Für die Nachreinigung der gasförmigen Phase kann auch der Einsatz einer Aktivkohle ohne nachgeschaltetem Molekularsieb ausreichend sein. Erfahrungsgemäß werden die kleineren Kohlenwasserstoffmoleküle bereits in den vorhergehenden Adsorptionsschritten beseitigt.

In einer günstigen Verfahrensausführung wird die Temperatur des Kohlendioxids während der gesamten Nachreinigung auf einer Temperatur von -5°C bis -30°C gehalten. In diesem Temperaturbereich sinkt das Lösungsvermögen des Kohlendioxids stark ab, so daß die Restverunreinigungen optimal aus dem Kohlendioxid adsorbiert werden können. Vorzugsweise wird Kohlendioxid bei -15° sowohl in flüssiger Phase als auch in gasförmiger Phase nachgereinigt. Dazu kann der gesamte Nachreinigungsprozeß in einem Klimaschrank, der auf eine entsprechende Temperatur geregelt wird, stattfinden.

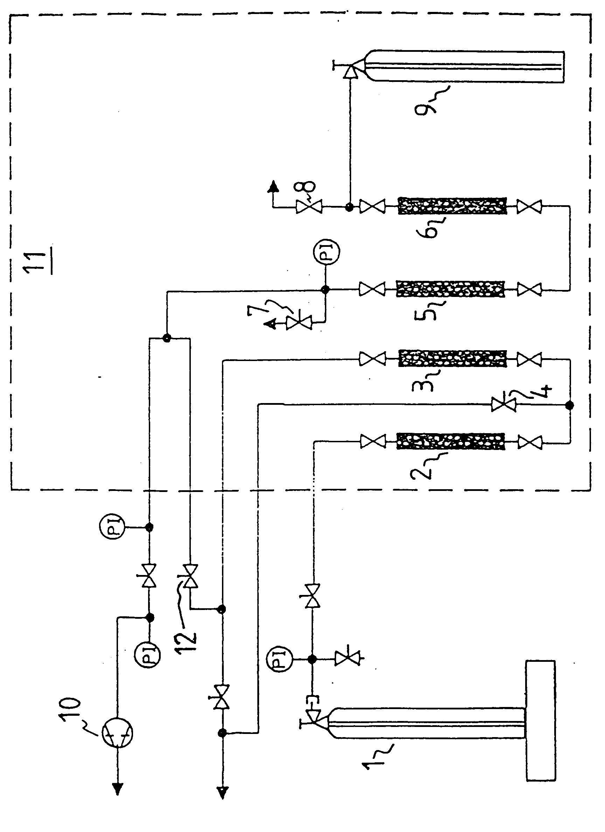

Im folgenden soll ein Ausführungsbeispiel anhand der Zeichnung das erfindungsgemäße Verfahren näher erläutern.

In der einzigen Zeichnung ist schematisch eine zur erfindungsgemäßen Herstellung hochreinen Kohlendioxids geeignete Anordnung dargestellt.

Aus dem Vorlagebehälter 1 wird mittels eines Tauchrohres flüssiges Kohlendioxid bei Raumtemperatur (Druck ca. 58 bar) entnommen und mittels eines Ventils auf einen Druck oberhalb etwa 25 bar entspannt. Dieses Restverunreinigungen aufweisende Kohlendioxid wird über eine Leitung in die Reinigungseinheit 11 geführt, die auf einer konstanten Temperatur von -15°C gehalten wird. Das Kohlendioxid tritt in flüssiger Form durch eine mit Aktivkohle 2 als Adsorptionsmittel gefüllte Patrone und anschließend durch ein Molekularsieb 3 (Zeolith) als nachgeschaltetes Adsorptionsmittel. Die Aktivkohle 2 adsorbiert Kohlenwasserstoffe ab C₅, während im Molekularsieb Moleküle bis C₅ und Wasser festgehalten werden.

In einer zweiten Reinigungsstufe wird erfindungsgemäß gasförmiges Kohlendioxid, das durch Entspannung des nachgereinigten flüssigen Kohlendioxids in einem Drosselventil 12 auf einen Druck von unterhalb etwa 25 bar entsteht, durch eine weitere Adsorptionseinheit geleitet, die wiederum aus einer mit Aktivkohle gefüllten Patrone 5 und einem Molekularsieb 6 besteht. Druckbegrenzend wirkt das Sicherheitsventil 7. Das derart erfindungsgemäß nachgereinigte hochreine Kohlendioxidgas wird nunmehr in einen Druckbehälter 9 geleitet, in dem es bei seinem Gleichgewichtsdruck kondensiert. Nachdem auf diese Art und Weise der Gasinhalt des Druckbehälters 1 nachgereinigt und in den Druckbehälter 9 geleitet worden ist, kann das hochreine Kohlendioxid für die Extraktion oder als mobile Phase für die Chromatographie eingesetzt werden.

Die in der Zeichnung dargestellte Vakuumpumpe 10 dient zur Entfernung von Gasresten, insbesondere von Luft, die nach der Regenerierung der Adsorptionsmittel 2, 3 und 5, 6 in den Patronen und Anschlußleitungen verbleiben bzw. einströmen. Nach jeder Reinigung und Reaktivierung der Adsorptionsmittel wird das gesamte System zunächst evakuiert, bevor der erfindungsgemäße Reinigungsprozeß erneut beginnt.

Die mittels bekannter Meßmethoden wie FID und ECD nachgemessenen Restverunreinigungen liegen für Kohlenwasserstoffe in der Summe in einem Bereich von vpb und für die halogenierten Kohlenwasserstoffe in einem Bereich von vpt. Damit ist die Hochreinheitsanforderung erfüllt.

## Patentansprüche

1. Verfahren zur Herstellung hochreinen Kohlendioxids durch adsorptive Nachreinigung, **dadurch gekennzeichnet, daß** Restverunreinigungen aufweisendes Kohlendioxid zunächst in flüssiger Phase durch mindestens ein Adsorptionsmittel (2, 3) und anschließend in gasförmiger Phase durch mindestens ein weiteres Adsorptionsmittel (5, 6) geleitet wird.

2. Verfahren nach Anspruch 1, dadurch gekennzeichnet, daß als Adsorptionsmittel (2, 3, 5, 6) für die gasförmige und/oder flüssige Phase des Kohlendioxids eine Aktivkohle und ein nachgeschaltetes Molekularsieb verwendet werden.

3. Verfahren nach einem der beiden Ansprüche 1 oder 2, dadurch gekennzeichnet, daß als Adsorptionsmittel (5) für die gasförmige Phase eine Aktivkohle verwendet wird.

4. Verfahren nach einem der Ansprüche 1 bis 3, dadurch gekennzeichnet, daß das Kohlendioxid bei einer Temperatur von -5°C bis -30°C, vorzugsweise bei - 15°C, nachgereinigt wird.

5. Verwendung des nach einem der vorhergehenden Ansprüche hergestellten Kohlendioxids zur Extraktion.

6. Verwendung des nach einem der vorhergehenden Ansprüche hergestellten Kohlendioxids als mobiles Medium bei der Chromatographie.

## Claims

1. Process for producing high-purity carbon dioxide by adsorptive secondary purification, characterized in that carbon dioxide containing residual impurities is first passed in the liquid phase through at least one adsorbent (2, 3) and then in the gaseous phase through at least one further adsorbent (5, 6).

2. Process according to Claim 1, characterized in that the adsorbents (2, 3, 5, 6) used for the gaseous and/or liquid phase of the carbon dioxide are an activated carbon and a downstream molecular sieve.

3. Process according to either Claim 1 or 2, characterized in that the adsorbent (5) used for the gaseous phase is an activated carbon.

4. Process according to one of Claims 1 to 3, characterized in that the carbon dioxide is subjected to secondary purification at a temperature of -5°C to -30°C, preferably at -15°C.

5. Use of the carbon dioxide produced according to one of the preceding claims for extraction.

6. Use of the carbon dioxide produced according to one of the preceding claims as a mobile medium in chromatography.

## Revendications

1. Procédé de préparation de gaz carbonique de haute pureté par post-nettoyage à adsorption, caractérisé en ce que le gaz carbonique présentant les impuretés restantes est conduit tout d'abord en phase liquide à travers au moins un agent d'adsorption (2, 3) et ensuite en phase gazeuse à travers au moins un agent d'adsorption supplémentaire (5, 6).

2. Procédé selon la revendication 1, caractérisé en ce que l'on utilise, en tant qu'agents d'adsorption (2, 3, 5, 6) pour la phase gazeuse et/ou pour la phase liquide du gaz carbonique, un charbon actif et un tamis moléculaire intercalé à la suite.

3. Procédé selon l'une quelconque des deux revendications 1 ou 2, caractérisé en ce que l'on utilise en tant qu'agent d'adsorption (5) pour la phase gazeuse un charbon actif.

4. Procédé selon l'une quelconque des revendications 1 à 3, caractérisé en ce que l'on procède au post-nettoyage du gaz carbonique à une température de -5°C à -30°C, de préférence à -15°C.

5. Utilisation du gaz carbonique préparé conformément à l'une quelconque des revendications précédentes en vue de l'extraction.

6. Utilisation du gaz carbonique préparé conformément à l'une des revendications précédentes en tant que milieu mobile en chromatographie.
